Europäisches Patentamt

European Patent Office

Office européen des brevets

(19)

(11) Publication number: **0 218 189**
A2

## (12) EUROPEAN PATENT APPLICATION

(21) Application number: **86113537.4**

(22) Date of filing: **01.10.86**

(51) Int. Cl.4: **C 04 B 40/02**

(30) Priority: **03.10.85 FI 853827**

(43) Date of publication of application: **15.04.87**
**Bulletin 87/16**

(84) Designated Contracting States: **AT BE CH DE ES FR GB GR IT LI LU NL SE**

(71) Applicant: **MNK-Rakennus Oy, Tammelankatu 24, SF-33100 Tampere (FI)**

(72) Inventor: **Sarja, Asko, Nuolitie 49, SF-00370 Helsinki (FI)**
Inventor: **Paroll, Hemming, Westendintie 93 C 13, SF-02160 Espoo (FI)**
Inventor: **Ahonen, Heikki, Painontie 25, SF-37630 Valkeakoski (FI)**

(74) Representative: **Görtz, Dr. Fuchs, Dr. Luderschmidt Patentanwälte, Sonnenberger Strasse 100 Postfach 26 26, D-6200 Wiesbaden (DE)**

(54) **Method for rapid hardening of concrete during concrete spraying (shotcreting).**

(57) The invention provides a method for the rapid setting of concrete during the spraying process of concrete. The method is based on using a cement based on such clinkers which release calcium hydroxide during the hydration reaction. In accordance with the invention, at least a certain amount of carbon dioxide is actively introduced into the fresh concrete mix, which is sprayed using carbon dioxide gas as a propellent. The carbon dioxide accumulated into the concrete mix provides rapid setting of the concrete and reduction of alkalinity, preferably down to a level of at least about pH 10, during 28 days. Carbon dioxide is introduced into the mix, for instance, by generating a foam into the mix consisting of a surface-active compound, water and carbon dioxide. A concrete product fabricated by spraying in accordance with the invention attains the handling consistency generally required for the product immediately after spraying.

Method for rapid hardening of concrete during concrete
spraying (shotcreting)

The present invention relates to a method for rapid
hardening of concrete during concrete spraying, or
shotcreting, in accordance with the preamble of claim 1.

The present concrete materials, which are typically based on
the use of cement with a proportion of 200...450 kg/m$^3$ as a
hydraulically hardening material for bonding the stone
aggregates and sand, achieve a required mold dismantling
strength within one day, measured on the compressive strength
basis. For the conventional Portland cement, the dismantling
strength is of the order of 10 MPa.

Portland cement is distinguished by the so-called lime
system in which tricalcium silicate releases lime during
hydration, and forms dicalcium silicate hydrate and free
calcium hydroxide. Other kinds of hydraulic cements are
also known, for instance, pozzolanic cements in which,
contrary to the Portland cement, lime is bound with the
calcium silicate constituents while it forms also in this
case dicalcium silicate. The third group of cements
consists of the so-called alkaline metal-activated cement
systems in which lime is neither released nor bound. One of
these types is, for instance, the blastfurnace slag based
cement and the so-called type F cement, in which the entropy
change from a glassy state into the crystalline state is
utilized while the silicate material is simultaneously
converted into a crystalline silicate hydrate mineral.

All afore-mentioned conventional cements for concrete mixes
are based on the formation of a silcate hydrate, which
requires water for hardening the concrete.

About a decade ago, a cement with a controlled setting time,
the so-called jet cement, was introduced, which also became
known as an ultra-rapid-hardening cement.

The clinker material of the jet cement has a high content of calcium aluminate complemented with calcium aluminate fluorides or chlorides, most commonly, calcium aluminate fluorides. This kind of jet cement attains the required compressive strength of 10 MPa in room temperature within a few hours.

When concrete materials of an even shorter setting time are desired, elevated temperatures can be used with the known effect of the Arrhenius rule, which states that the velocity of chemical reactions always doubles per each 10 K rise of temperature if no other limiting factors are present in the system. Consequently, it has been customary and characteristic for the development in concrete technology to use either heat treatment of a cast product or, today, to resort increasingly to the use of a heated concrete mix.

In addition, the concrete technology utilizes accelerating admixtures. The accelerating admixtures are based on the addition of lime solubility improving accelerators to the water imbedded in the fresh concrete mix in order to increase the concentration of calcium ions and, consequently, to speed up the rate of the autocatalytic reaction caused by lime. Accelerating admixtures known in the art are chlorides, formates, nitrates, and nitrites, to mention a few.

The casting technique of concrete principally recognizes three most frequently used methods:

1) The easily workable concrete method, in which the mix is so workable that it can be compacted and cast merely by pouring and possibly by slightly shifting it (e.g. by vibration so as to remove air bubbles and to compact the mix).

2) The stiff concrete mix method, which utilizes external accelerating forces, such as hydraulic vibration or vibrating rods that move with the mix and generate compaction in the thixotropic material.

3) The auger fligth method, in which the concrete mix is compacted with auger flights. The auger fligth method is used today mainly for producing hollow-cored slabs and, to some extent, piles and beams, by casting concrete around prestressed reinforcing steels.

A fourth method, rarely used in Scandinavia, is the spraying (shotcreting) technique in which the kinetic energy of the sprayed concrete mix and the impact force released from the impact of concrete against the solid wall is utilized in order to achieve compaction. Spraying is used for the protection of certain ferroconcrete products, dome constructions and protection of blasting operations when casting is impossible.

Concrete carbonation has been known since 1870 in accordance with US patent publication 109 669 (Rowland) and 1872, US patent publication 128 980. These publications describe the dissolution of the carbonating carbon dioxide gas in the mixing (gaging) water of the concrete mix. From later years further disclosures of US patents are known, e.g. 2 496 895, 3 149 986, 2 468 993, and 3 492 385. The aforementioned patents describe the pressurizing of concrete in the presence of carbon dioxide and the processing of concrete in various containers, either with or without a vacuum.

The SE patent application 790014 (Roman Malinowski) describes carbonation of a cast concrete product complemented with vacuum handling, primarily for vacuum concrete floors or similar products.

However, none of these patents describe the simultaneous use of the carbonation and spraying methods as is disclosed in our present invention.

This invention combines the spraying technique and the so-called carbonation technique, preferably by using a single-sided mold and by performing a quick dismantling of the mold.

4    0218189

In conjunction with a heat-insulated construction, spraying is applied directly on the surface of the insulation, and correspondingly, direct fast-curing surface spraying is generally performed during the coating process of a construction.

In prior art it is generally known that such concrete material that releases calcium hydroxide as a result of the previously described hydration reactions can be carbonated, e.g., by means of carbon dioxide, so that the free calcium hydroxide generates calcium carbonate via an extremely fast reaction with carbon dioxide, which leads to a rapid initial hardening of the concrete material.

These trials have occasionally been attempted in, e.g. enclosed molds by introducing carbon dioxide into the concrete mixing drum. However, this procedure most generally leads to excessively rapid stiffening of the mix. Our experiments have shown that it is advantageous to perform carbonation for a concrete mix which has had sufficient time to hydrate up to a certain degree, in most cases preferably using a delayed process in which, inspite of the advancement of hydratation and the release of lime, no significant crystallization occurs; and to perform carbonation in conjunction with such a spraying procedure in which the mix is sprayed, driven by the pressure of a propellent gas at a sufficient velocity to make the sprayed mix adhere by impaction to the mold material as well as to the mix already adhering to the mold. The propellent for the mix in the concrete spraying device is in this case gas, which contains carbon dioxide or is pure $CO_2$. The preferred proportion of carbon dioxide in the propellent gas is 20...100 %, preferably about 100 %.

However, using carbon dioxide alone as a propellent does not achieve sufficient inclusion of carbon dioxide in the concrete mix. Another new result obtained is that by actively introducing at least some amount of carbon dioxide into the concrete mix prior to spraying, and simultaneously inhibiting the initial setting of the concrete mix, the carbon dioxide content can be increased and adjusted as desired. If carbon dioxide is introduced into the mix by utilizing carbon dioxide gas in overpressure, the mix temperature should be reduced by 5...10 K below room temperature. Conversely, the carbon dioxide can be introduced in a fresh concrete mix by generating a foam composed of a surface-active compound, water and carbon dioxide, into the mix prior to spraying.

More specifically, the method in accordance with the invention is primarily characterized in what is claimed in the characterizing part of claim 1.

The carbon dioxide foam can be generated either completely separate from the concrete mixing operation, which requires mixing it into the mix in the concrete pumping and spraying equipment hose just prior to spraying, or it can be generated by adding surface-active compounds in the concrete mix and thereafter introducting part of the carbon dioxide repellent into the concrete mix through a mixing process.

The propellent and the concrete mix to be pumped are mixed in the spraying equipment either using an externally driven mechanical mixing equipment or a static mixer, which utilizes the kinetic energy of the pumped materials and the repellent.

The method in accordance with the invention preferably incorporates the removal of air from the concrete mix by vacuum handling prior to the introduction of carbon dioxide into the mix. To maximize the generation of free lime in the hydration reaction, the concrete mix is furthermore provided with retarding admixtures, which inhibit crystallization of the mix although the hydration reaction has already advanced relatively far. The retarding admixtures may consist of both inorganic and organic products. As an example of the last-mentioned group, the following compounds may be mentioned: lignosulphonates, the salts of hydroxycarboxylic and carboxylic acids and carbohydrates and their oxidation products. For the same purpose of maximizing the generation of free lime, the concrete mix is also provided with accelerating admixtures, which increase the solubility of calcium in the mixing water. In order to retain a low ratio of water to cement in the concrete mix, known types of plasticizing admixtures are used, such as lignosulphonates, naphtalene sulphonate condensates, or sulphonates of melamine formaldehyde condensates.

The invention provides outstanding benefits. Accordingly, the proportion of carbon dioxide pores can be increased, when required, essentially up to 70 % by volume. On the other hand, the amount of carbon dioxide introduced can be used for controlling the development of concrete mix strength and pH. Reduction of pH is required, for instance, when a fiber or felt reinforcement is used, such as glass fiber, which is susceptible to corrosion in an alkaline environment. Additionally, a sprayed concrete product fabricated in accordance with the invention attains the handling consistency generally required for the product almost immediately after spraying.

The invention will be examined in detail in the following exemplifying embodiments with reference to the attached figures.

Figure 1 shows a penetrometer curve which indicates the compressive strength of the sprayed mix in grams as a function of time.

Figure 2 shows furthermore a shear surface of a test cube fabricated from the mix and subjected to a phenolphtalein test.

Example 1

Portland cement with a tricalcium silicate content of 62 %
was used for producing the concrete mix. The proportion
of cement in the concrete mix was 400 kg/m$^3$, and the ratio
of water to cement was 0.4. The mix was plasticized with
1 % by weight of naphtalene formaldehyde condensate.
The rest of the mixing material constituents comprised sand
with a grain size of less than 1 mm.

A surface-active compound, water, and carbon dioxide, was
used to produce foam which was mixed into the concrete
mix in the hose of the pumping and spraying equipment just
prior to spraying so that the proportion of carbon dioxide
pores was about 70 % by volume in the mix. The carbon
dioxide propellent and the pumped concrete mix were mixed in
the spraying equipment with a mechanical mixing apparatus.

Any compound applicable to the production of aerated
concrete or another auxiliary air-entraining compound can be
used as the surface-active constituent. Synthetic tensides,
natural and synthetic resins and resin soaps, and alkaline
metal salts of sulphonated oils or fatty acids are representative of such compounds. The surface-active constituent
may also incorporate foam stabilizing compounds such as
proteins, (e.g., potato protein) or similar compounds. The
amount of admixture used is selected according to the desired quantity of foam and the surface-active compound used;
generally the surface-active compound is required for
0.05...5 % of the water weight. However, these limits are
no absolute limit values.

In the present example, Poresin "X" (Cheban, Italy) was
used as surface-active compound, the dosage being 2 % of the
water weight. The active component of said product is
lauryl sulphonate.

The concrete mix, which had pores containing the carbon
dioxide gas ($CO_2$) produced by the aforementioned method, was sprayed using a concrete mix pump with a pressure of 10 bar, a temperature of 20°C, and applying carbon dioxide gas as a propellent. Spraying was done on trial cubes and an expanded polystyrene slab covered with polyethylene coated glass fiber felt.

The sprayed mix was sampled for a penetrometer test, which was used for monitoring the setting of the mix.

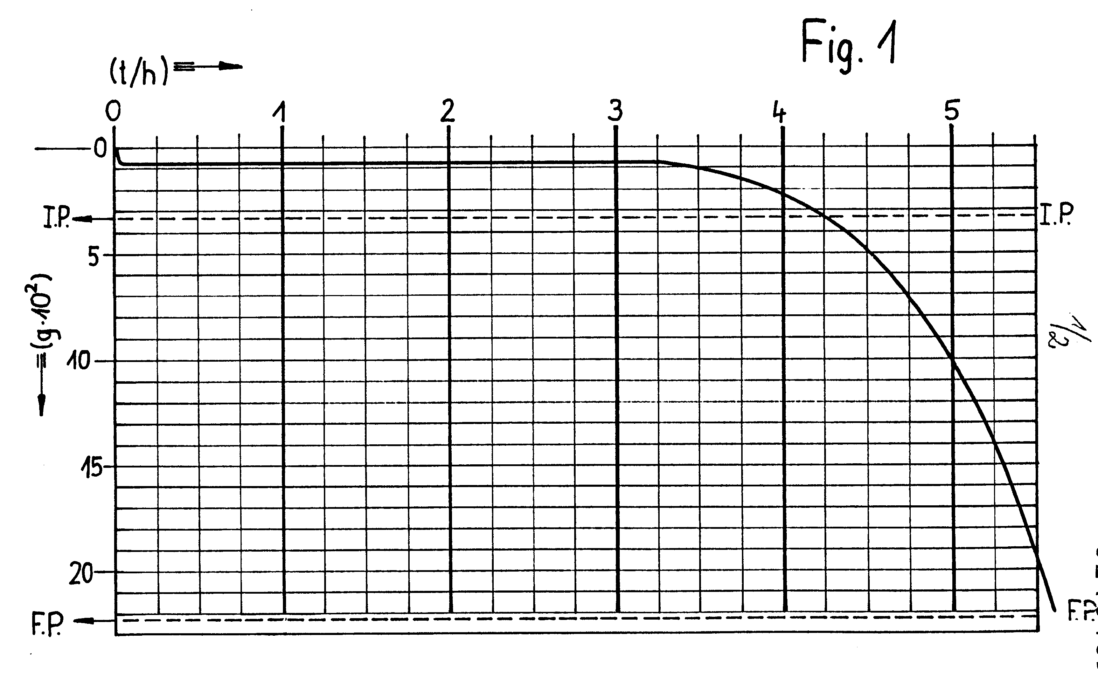

Figure 1 shows the penetrometer curve, which indicates the compression strength tolerated by the mix in grams, ($g \times 10^2$) as a function of time. The penetrometer reading shows that the required initial stiffness for starting mold dismantling has already been achieved after about 5 min and the 5.5 hour strength of the cube was as high as 28 MPa (the penetrometer scale is relative). Even at the start of the test, the mix tolerated a load of $1 \times 10^2$ g (= 100 g).

In practical conditions, the achieved results were observed from the immediate setting of the sprayed mix after spraying. No dripping of mix was observed. Consequently, the sprayed concrete mix had attained the handling strength generally required for a product immediately after spraying. An equal handling consistency is generally attained with a concrete mix manufactured of rapid hardening cement after about 3 hours from mixing.

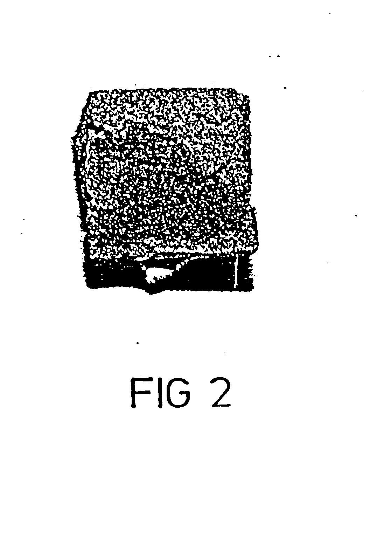

The trial cubes were retained for 28 days in a climatized room. Then one of the cubes was sheared and the sheared surface was subjected to the phenolphtalein test which clearly indicated the carbonation (Figure 2). The attached figure of the crushed cube shows that the pH value in the inner part of the cube is about 10, and in the outer part about 8 because the pH indicator performs a colour change over the pH scale of 8...10.0.

The test indicated that the method is capable of quickly decreasing the pH of concrete to a sufficiently low level, in order, for instance, to eliminate alkaline corrosion on glass fiber.

As mentioned above, the scope of the invention naturally covers other solutions differing from the described embodiment as indicated in the following examples.

Example 2

Deviating from the previous example, the sand used was replaced by 1/10 with crushed dolomite stone with a grain size of 0...0.5 mm. The mix was pretreated with a retarding admixture containing sodium gluconate. The dosage was 0.1 % of the mix weight. The mix described above was mixed and stabilized for 20 min before spraying, instead of the conventional 2 min, in order to release a greater amount of free lime from the hydration reaction in excess of that released in the conventional process. Spraying and carbonation was subsequently performed as described above. The penetrometer curve of the concrete mix resembled that of the previous example.

Example 3

Using an overpressurized carbon dioxide gas environment, carbon dioxide was introduced into the mix described in Example 1 during a mixing process. The mixing time was 7 min and the temperature was retained at 5...10 K below room temperature (i.e. at 10...15°C). The carbon dioxide-containing mix produced by this method was workable for about 1 hour. The mix was sprayed using the method described in Example 1. The setting of this mix was monitored using the penetrometer equipment. The penetrometer curve from this test resembled the curve obtained in Figure 1 with such a difference that the actual setting took place about an hour earlier than in Example 1.

WHAT IS CLAIMED IS:

1. A method for rapid hardening of concrete during the spraying process of concrete using a cement based on clinkers which release calcium hydroxide during the hydration reaction, c h a r a c t e r i z e d  in that
- at least a certain amount of carbon dioxide is actively  introduced into the fresh concrete mix prior to spraying the mix and
- the mix is sprayed using carbon dioxide as a propellent,

whereby, by means of the carbon dioxide accumulated in the concrete mix, a rapid hardening of the concrete and reduction of its alkalinity, preferably down to a level of about pH 10 or less, is achieved during 28 days.

2. A method in accordance with claim 1, c h a r a c t e r i z e d  in that the carbon dioxide is introduced into the fresh concrete mix by generating a foam into it, consisting essentially of a surface-active compound, water and carbon dioxide, prior to mix spraying.

3. A method in accordance with claim 2, c h a r a c t e r i z e d  in that the carbon dioxide foam is generated into the concrete mix by adding surface-active compounds into it prior to spraying, and by introducing a portion of the carbon dioxide propellent by mixing it into the concrete mix during spraying.

4. A method in accordance with claim 2, c h a r a c t e r i z e d  in that the carbon dioxide foam is generated separately from the concrete mix so that the foam is mixed into the concrete mix in the hose of the pumping and spraying equipment just prior to spraying.

5. A method in accordance with claims 2...4, c h a r a c t e r i z e d  by using a surface-compound which also incorporates a foam stabilizing compound.

6. A method in accordance with claim 1 or 2, c h a r a c t e r i z e d in that the propellent and the pumped concrete mix are mixed in the spraying equipment using a mechanical mixing apparatus or a static mixer.

7. A method in accordance with any preceding claim, c h a r a c t e r i z e d in that air is removed from the concrete mix by vacuum handling prior to introduction of carbon dioxide into the mix.

8. A method in accordance with any one of claims 1 to 7, c h a r a c t e r i z e d in that, in order to maximize the generation of free lime in the hydration reaction, the concrete mix is provided with retarding admixtures, which inhibit crystalization in the material although the hydration reaction has advanced relatively far.

9. A method in accordance with claim 8, c h a r a c t e r i z e d in that the concrete mix is mixed and allowed to stabilize for about 20 min prior to spraying.

10. A method in accordance with any one of claims 1 to 7, c h a r a c t e r i z e d by performing the mixing of the concrete mix at a temparature which is 5...10 K below room temperature.

11. A method in accordance with any one of claims 1 to 10, c h a r a c t e r i z e d in that, in order to maximize the generation of free lime, accelerating admixtures are also introduced into the concrete mix to increase the solubility of calcium in the mixing water.

12. A method in accordance with any one of claims 1 to 11, c h a r a c t e r i z e d in that, in order to retain a low water to cement ratio, the concrete material is provided with known types of plasticizers, such as lignosulphonates, naphthalene sulphonate condensates, or sulphonates of melamine formaldehyde condensates.

Fig. 1

FIG 2